Europäisches Patentamt

European Patent Office

Office européen des brevets

(19)

(11) Veröffentlichungsnummer : **0 050 786**
**B1**

(12)                    **EUROPÄISCHE PATENTSCHRIFT**

(45) Veröffentlichungstag der Patentschrift :
09.09.87

(51) Int. Cl.⁴ : **G 09 G    1/16**, G 06 K 15/10

(21) Anmeldenummer : 81108238.7

(22) Anmeldetag : 12.10.81

(54) **Verfahren und Schaltungsanordnung zur Transformation der Zeichenbreite von Schriftzeichen.**

(30) Priorität : 24.10.80 DE 3040166

(43) Veröffentlichungstag der Anmeldung :
05.05.82 Patentblatt 82/18

(45) Bekanntmachung des Hinweises auf die Patenterteilung : 09.09.87 Patentblatt 87/37

(84) Benannte Vertragsstaaten :
AT BE CH FR GB IT LI LU NL SE

(56) Entgegenhaltungen :
US-A- 3 712 443

(73) Patentinhaber : Siemens Aktiengesellschaft Berlin
und München
Wittelsbacherplatz 2
D-8000 München 2 (DE)

(72) Erfinder : Rossner, Florian, Dipl.-Ing.
Kleinfeldstrasse 11
D-8301 Fürth (DE)
Erfinder : Jaud, Bernhard, Dipl.-Ing.
Endbachweg 7
D-8011 Poing (DE)

## Beschreibung

Die Erfindung betrifft ein Verfahren zur Transformation der in Rasterabständen gemessenen Zeichenbreite bei der Darstellung von Schriftzeichen in unterschiedlichen Wiedergabegeräten, sowie eine Anordnung zur Durchführung des Verfahrens.

Unter Schriftzeichen sollen im folgenden Buchstaben eines Alphabets, Satzzeichen, Ziffern und Sonderzeichen, sowie Wortabstände (Leerzeichen) verstanden werden.

Es ist häufig notwendig, Schriftgut auf verschiedenen Geräten auszugeben. Beispielsweise wird bei Schreibautomaten das eingetastete Schriftgut zunächst· auf einem Bildschirm angezeigt und erst anschließend ausgedruckt. Dabei finden Drucker verschiedener Geschwindigkeit und Zeichenauflösung Anwendung. Um den Gesamteindruck des Schriftgutes auf allen Wiedergabegeräten möglichst unverändert beizubehalten, müssen alle Geräte mit der gleichen oder mit einer in einem festen Verhältnis zueinander stehenden Auflösung der Zeichen arbeiten. Dies ist besonders wichtig, wenn das Schriftgut Tabellen und ähnliche Zusammenstellung enthält, bei denen auch eine spaltenweise Zuordnung von Schriftzeichen wesentlich ist.

Bei den hier in Betracht gezogenen Wiedergabegeräten sind die Schriftzeichen in ihrer Höhe und Breite in feste Rasterabstände eingeteilt. Ein typischer Vertreter eines druckenden Wiedergabegeräte solcher Art ist der bekannte Nadeldrucker.

Bei Bildschirmen und Druckern ist sowohl die Zeilenlänge als auch die maximale Zahl der Rasterpunkte bzw. der Rasterabstände in einer Reihe vorgegeben. Eine volle Zeile bei einem Wiedergabegerät soll möglichst auch durch das andere Wiedergabegerät als volle Zeile abgebildet werden. In den meisten Fällen stehen jedoch die entsprechenden Zahlen der Rasterabstände nicht in einem ganzzahligen Verhältnis. Das gilt sowohl für ein Schriftbild, bei dem jedem Zeichen (auf einschließlich den beidseitigen Anteilen am Zeichenabstand) die gleiche Anzahl von Rasterabständen zugeordnet ist, als auch für die sogenannte Proportionalschrift, die im Buchdruck seit langem üblich ist und unterschiedliche Zeichenbreiten verwendet. Sie soll den weiteren Betrachtungen, die auch für Typendrucker gelten, zugrundeliegen.

Es ist die Aufgabe der Erfindung, ein Verfahren der eingangs genannten Art anzugeben, bei dem der Gesamteindruck des wiedergegebenen Schriftbildes möglichst wenig beeinträchtigt wird. Ferner soll eine Anordnung zur Durchführung des Verfahrens vorgestellt werden.

Gemäß der Erfindung wird der erste Teil der Aufgabe mit Hilfe der Merkmale im kenzeichnenden Teil des Patentanspruchs 1 gelöst. Die Lösung des zweiten Teils der Aufgabe ergibt sich aus dem Patentanspruch 2. ·

Im folgenden wird die Erfindung näher beschrieben. Ausführungsbeispiele für eine Schaltungsanordnung zur Durchführung des erfindungsgemäßen Verfahrens sind in der Zeichnung dargestellt. Es zeigt darin

Figur 1   eine Übersicht über die Schaltungsanordnung zur Transformation der Zeichenbreite,
Figur 2   ein erstes Ausführungsbeispiel,
Figur 3   ein Zeitdiagramm zu dem Ausführungsbeispiel nach Fig. 1,
Figur 4   ein weiteres Ausführungsbeispiel,
Figur 5   eine Tabelle über die Zuordnung von Adressen und Inhalten des Korrekturspeichers.

Der nachstehenden Beschreibung liegt als Beispiel folgender Sachverhalt zugrunde :

Ein Text in Proportionalschrift soll durch einen Drucker und auf einem Bildschirm wiedergegeben werden. Die Schriftzeichen sind so gestaltet, daß sich beim Drucken Zeichenbreiten von drei Rasterabstanden bis zu acht Rasterabständen mit allen ganzzahligen Zwischenwerten ergeben.

Es sei ferner angenommen, daß eine Druckzeile maximaler Länge 480 Rasterabständen entspricht, währen eine Zeile auf dem Bildschirm in 640 Rasterabstände eingeteilt ist. In beiden Fällen sind für diese Werte technische Gründe maßgebend, auf die hier nicht näher einzugehen ist.

Die Breiten der Schriftzeichen stehen also in den beiden Wiedergabegeräten zueinander in einem Verhältnis von 3 : 4, wenn der Gesamteindruck der Schriftbilder in beiden Fällen der gleiche sein soll, was vorausgesetzt wurde. Gemessen jeweils in Rasterabständen ergeben sich daraus Rechenwerte für die Zeichenbreite.

| Drucker | Bildschirm |
|---|---|
| 3 | 4 |
| 4 | 5 1/3 |
| 5 | 6 2/3 |
| 6 | 8 |
| 7 | 9 1/3 |
| 8 | 10 2/3 |

Da jedoch für die Darstellung von Schriftzeichen nur ganze Rasterabstände verwertbar sind, wird bei nichtganzzahligen rechnerischen Werten für die Zeichenbreite der nächstniedrige ganzzahlige Wert benützt. In dem gewählten Beispiel kommen daher für die Anzeige auf dem Bildschirm Zeichenbreiten von 4, 5, 6, 8, 9 und 10 Rasterabständen in Frage.

Die dabei entstehenden Fehler, d. h. die Unterschiede zwischen den Rechenwerten und der Breite der tatsächlich dargestellten Schriftzeichen von 1/3 oder 2/3 Rasterabständen werden addiert. Erreicht die Fehlersumme den Wert « 1 », dann wird vor das nächstfolgende Schriftzeichen ein zusätzlicher Abstand von einem Rasterabstand eingefügt und die Fehlersumme um 1 verringert. Ein möglicherweise verbleibender Restfehler von 1/3 Rasterabstand, z. B. nach einer vorausgehenden Addition von 2/3 Rasterabstand zu einer Fehlersumme von 2/3 wird bei der folgenden Addition berücksichtigt.

Im Vergleich mit der gedruckten Ausgabe von Schriftgut können sich auf dem Bildschirm gegenseitige Verschiebungen von untereinanderstehenden Schriftzeichen von max. 2/3 Rasterabstand ergeben. Versuche haben gezeigt, daß diese Verschiebungen ebenso wie die bedarfsweise um einen Rasterabstand vergrößerten Abstände der Schriftzeichen von unbefangenen Betrachtern kaum wahrgenommen werden.

Das erfindungsgemäße Vorgehen ist nicht auf das beschriebene Beispiel beschränkt, bei dem das von einem Drucker wiedergegebene Schriftbild gewissermaßen als Standard dient und das auf einem Bildschrim dargestellte Schriftbild in möglichst vollkommener Weise angepaßt wird. Es ist auch möglich. von dem Schriftbild auf dem Bildschirm auszugehen und das Schriftbild des Druckers anzupassen. Ebenso können auch die Schriftbilder von zwei Druckern mit verschiedenem Auflösungsvermögen einander angeglichen werden.

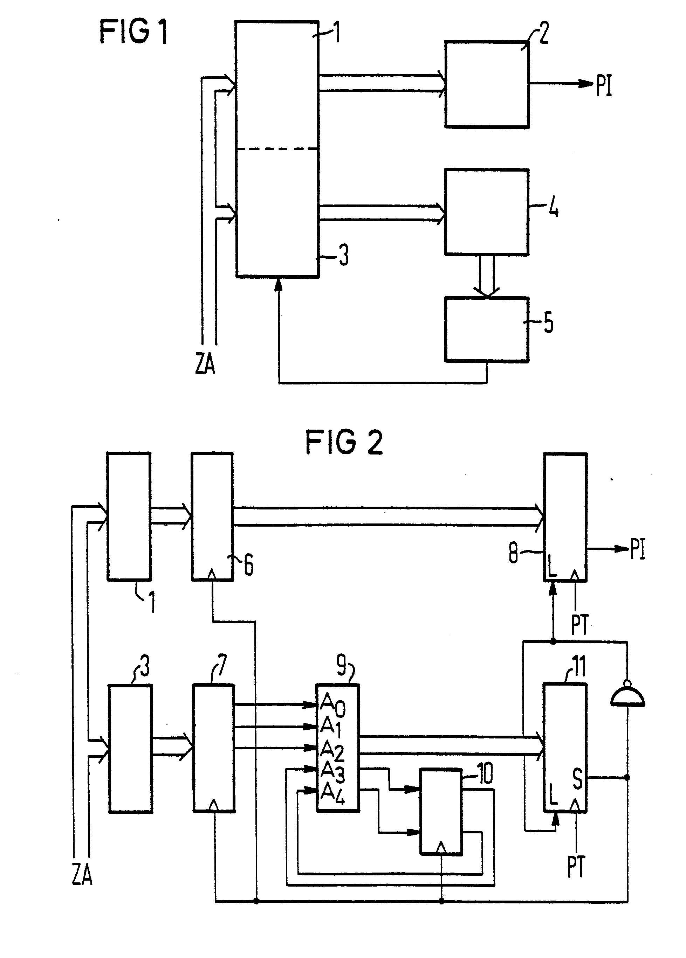

Die Fig. 1 zeigt die wesentlichen Funktionseinheiten einer Schaltungsanordnung zur Durchführung des erfindungsgemäßen Verfahrens. Ein in an sich bekannter Weise vorgesehener Zeichengenerator 1 liefert entsprechend seiner jeweiligen Adressierung Daten in paralleler Form, welche die Verteilung der markierten Rasterpunkte in einer Reihe für die Darstellung eines Zeichens bestimmt. Diese Daten werden durch einen Parallel-Serien-Wandler 2 in die serielle Punktinformation PI umgeformt.

Dem Zeichengenerator 1 ist ein Zeichenbreitengenerator 3 zugeordnet. Der Zeichenbreitengenerator 3 wird gleichzeitig mit dem Zeichengenerator 1 adressiert und liefert eine beispielsweise 3 Bit umfassende Information, welche die in Rasterabständen gemessene Breite des abzubildenden Schriftzeichens in einer an sich beliebigen Codierung angibt. Eine Korrekturschaltung 4 ermittelt eine gegebenenfalls vorliegende Differenz zwischen einem nicht ganzzahligen Rechenwert für die Zeichenbreite und der nächst niedrigen Anzahl von Rasterabständen und addiert diese Differenzen.

Die die Zeichenbreite bestimmende Anzahl von Rasterabständen wird in einer Folgezeichenlogik 5 gezählt. Hierzu dient ein Punkttakt, dessen Impulsabstände so gewählt sind, daß in der gleichen Zeitspanne die horizontale Strahlablenkung auf dem Bildschirm oder der Vorschub bei einem Drucker gerade einen Rasterabstand beträgt. Entspricht das Zählergebnis der vorgegebenen Zeichenbreite, dann gibt die Folgezeichenlogik 5 ein Signal ab, das die Übernahme der für das nächste Zeichen gültigen Daten auslöst.

Stellt die Korrekturschaltung 4 fest, daß die von ihr gebildete Fehlersumme den Wert « 1 » erreicht oder gerade überschritten hat, dann teilt sie dieses Ereignis der Folgezeichenlogik 5 mit, die mit der Ausgabe des Auslösesignals wartet, bis ein zusätzlicher Rasterabstand durchlaufen ist. Der Parallel-Serien-Wandler 2 muß während dieser Zeit eine Leerpunktinformation ausgeben.

Ein in mehr Einzelheiten gehendes Ausführungsbeispiel für eine Schaltungsanordnung zur Transformation der Zeichenbreite ist in Fig. 2 dargestellt. Die Zeichenadresse ZA adressiert den schon genannten Zeichengenerator 1 und den Zeichenbreitengenerator 3, wie bereits beschrieben wurde. Beiden Generatoren sind in dem Ausführungsbeispiel nach Fig. 2 Register, nämlich ein Zeichenregister 6 und ein Breitenregister 7 zur Zwischenspeicherung der entsprechenden Informationen nachgeschaltet. Dem Zeichenregister 6 folgt als Parallel-Serien-Wandler ein Zeichen-schieberegister 8, das aus dem Zeichenregister 6 parallel geladen wird und die serielle Punktinformation PI ausgibt.

Mit den Ausgängen des Breitenregisters 7 sind drei Adresseneingänge $A_0$ bis $A_2$ eines Korrekturspeichers 9 verbunden. Der Korrekturspeicher 9 kann ein Schreib-Lese-Speicher, ein Festwertspeicher oder ein programmierbarer Festwertspeicher sein. Er bildet zusammen mit einem Breitenkorrekturregister 10 die Korrekturschaltung 4 nach Fig. 1, deren Wirkungsweise in einzelnen weiter unten beschrieben wird.

Mit einer ersten Gruppe von Ausgängen des Korrekturspeichers 9 sind die Eingänge zur Paralleleingabe eines Breitenschieberegisters 11 verbunden, dessen Fortschaltung durch den Punkttakt PT erfolgt. Das Laden des Breitenschieberegisters 11 aus dem Korrekturspeicher 9 geschieht so, daß am Serienausgang S des Breitenschieberegisters 11 zunächst ebensoviele « Einsen » erscheinen, wie die Breite des gerade wiederzugebenenden Schriftzeichens in Rasterabständen beträgt. Darauf folgt eine « 0 ». Sie bewirkt zusammen mit dem nächstfolgenden Impuls des Punkttaktes PT, das erneute Laden des Zeichenschieberegisters 8 und des Breitenschieberegisters 11, ferner die Übernahme einer neuen Punktinformation in das Zeichenregister 6 und einer neuen Breiteninformation in das Breitenregister 7 sowie das Laden des Breitenkorrekturregisters 10. Die « 0 » am Serienausgang des Breitenschieberegisters 11 verschwindet sodann wegen der Eingabe einer neuen Serie von « Einsen » wieder.

Zur Verringerung der Anzahl der Ausgänge des Korrekturspeichers 9 und seiner Speicherkapazität kann zwischen den Korrekturspeicher 9 und das Breitenschieberegister 11 ein in Fig. 2 nicht dargestellter Decoder eingefügt sein. Entsprechendes gilt auch für die Schnittstelle zwischen dem Zeichenregister 6 und dem Zeichenschieberegister 8.

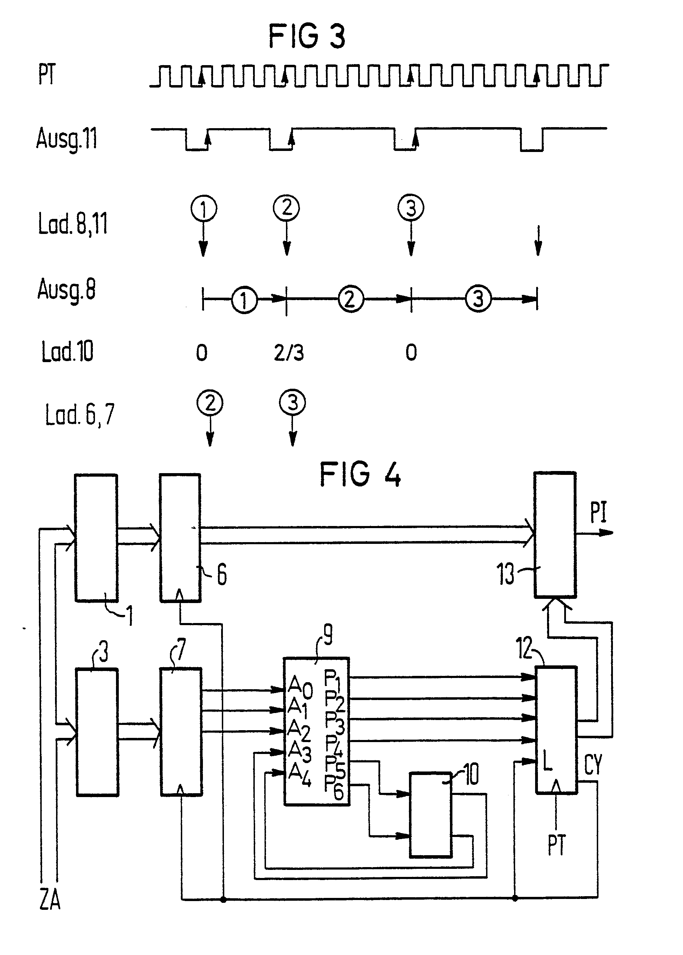

Die vorstehend geschilderten Funktionen sind auch aus dem Zeitdiagramm aus Fig. 3 ersichtlich. Der Darstellung sind ein Zeichen ① mit der rechnerischen Breite 4, ein Zeichen ② mit der rechnerischen Breite 6 2/3 und ein Zeichen ③ mit der rechnerischen Breite 5 1/3 zugrunde gelegt. Dementsprechend ist dem Zeichen ① die Breite 4 und dem Zeichen ② die Breite 6 zugeordnet. Das Zeichen ③ erhält gleichfalls die Breite 6, da inzwischen die Fehlersumme den Wert « 1 » entsprechend einem ganzzahligen Rasterabstand erreicht hat.

Der Korrekturspeicher 9 weist neben der genannten ersten Gruppe von Ausgängen zwei weitere Ausgänge auf, die mit den Eingängen des ebenfalls schon erwähnten Breitenkorrekturregisters 10 verbunden sind. An die Ausgänge dieses Registers sind zusätzliche Adresseneingänge $A_3$ und $A_4$ des Korrekturspeichers 9 angeschlossen. Die zuletzt genannten Verbindungen vom und zum Korrekturspeicher 9 sind den Bruchteilen 1/3 und 2/3 Rasterabstand, d. h. den Differenzen zwischen den rechnerischen Zeichenbreiten und ihren nächst niedrigen ganzzahligen Werten zugeordnet.

Weitere Einzelheiten werden in Verbindung mit einem zweiten Ausführungsbeispiel nach Fig. 4 beschrieben. Dieses Ausführungsbeispiel unterscheidet sich von dem Ausführungsbeispiel nach Fig. 2 durch den Ersatz des Breitenschieberegisters 11 durch einen Breitenzähler 12 und des Zeichenschieberegisters 8 durch einen Multiplexer 13.

Der durch den Punkttakt PT betriebene 4-Bit-Breitenzähler 12 wird beispielsweise durch die vom Korrekturspeicher 9 stammende Information so voreingestellt, daß er beim Hochzählen nach so vielen Impulsen ein Übertragssignal CY abgibt, wie der Breite des betreffenden Schriftzeichens entspricht. Dabei gilt der das Laden des Breitenzählers 12 auslösende Impuls als erster Zählimpuls.

Der Multiplexer 13 zur wahlweisen Durchschaltung einer von n Eingangsleitungen auf eine Ausgangsleitung wird durch den jeweiligen Stand des Breitenzählers 12 gesteuert.

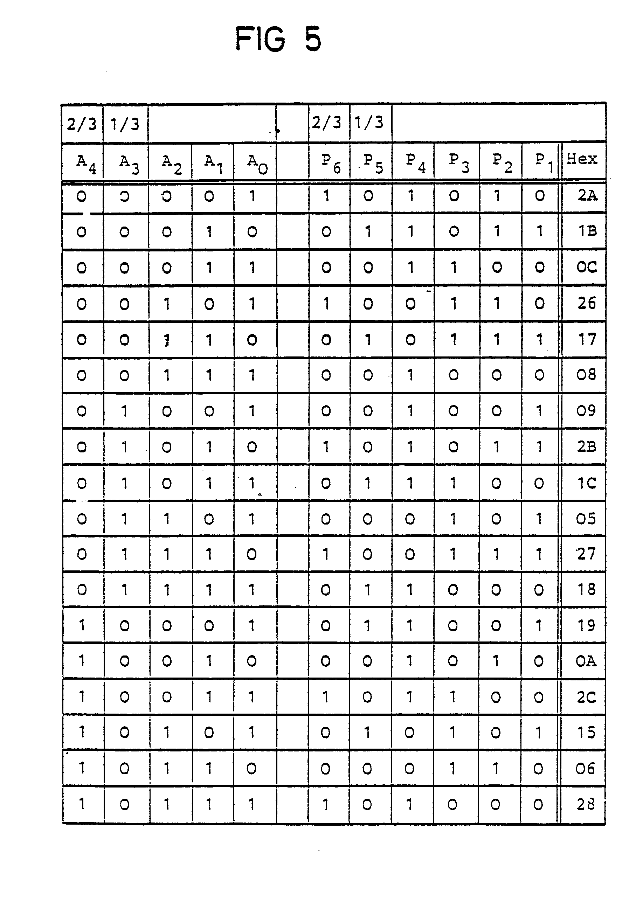

Die vom Korrekturspeicher 9 ausgegebene Breiteninformation ist den angegebenen Bedingungen angepaßt. Die Fig. 5 zeigt in Form einer Tabelle die Belegung des Korrekturspeichers 9. Wie ersichtlich, sind einige der möglichen Kombinationen der 5 Bit an den Adressen-eingängen $A_0$ bis $A_4$ nicht benützt und daher in der Tabelle nicht aufgeführt. Da nur 6 verschiedene Zeichenbreiten vorgesehen sind, werden auch nur 6 verschiedene Werte des Breitencodes an den Adresseneingängen $A_0$ bis $A_2$ gebraucht. Desgleichen entsteht grundsätzlich keine Bitkombination 11 an den Adresseneingängen $A_3$ und $A_4$, die den Bruchteilswerten 1/3 und 2/3 zugeordnet sind.

Die Bit an den Ausgängen $P_1$ bis $P_4$ des Korrekturspeichers 9 dienen zur Voreinstellung des Breitenzählers 12. Wegen der beschriebenen Zählweise bilden sie das Komplement der jeweiligen Zeichenbreite zur Zahl 16. Die Bit an den Ausgängen $P_5$ und $P_6$ geben wieder die Bruchteilswerte 1/3 bzw. 2/3 an.

Anhand der Tabelle Fig. 5 läßt sich die Wirkungsweise der aus dem Korrekturspeicher 9 und dem Breitenkorrekturregister 10 bestehenden Korrektureinrichtung leicht ablesen, wobei im folgenden die einzelnen Bit wie die Anschlußklemmen, an denen sie anliegen, genannt sind.

Beispielsweise möge die Adresse für den Korrekturspeicher 9 nach Zeile/der Tabelle 00001 lauten. Der Speicher gibt dann aus 101010. Die letzten vier Stellen bedeuten die Dezimalzahl 10. Wegen der Komplementbildung entspricht das der Zeichenbreite 6. Da der zugehörige Rechenwert 6 2/3 beträgt, ist also ein Fehler von 2/3 Rasterabstand entstanden, der durch $P_6 = 1$ angezeigt wird. $P_6 = 1$ wird im Breitenkorrekturregister 10 gespeichert.

Der Breitencode für das folgende Zeichen sei wieder 001. Wegen der Rückführung des im Breitenkorrekturregister 10 gespeicherten Bit $P_6 = 1$ als Adressbit $A_4 = 1$ lautet die vollständige Adresse 10001. Damit entsteht am Ausgang des Korrekturspeichers 011001. Das bedeutet, daß zu der ursprünglichen Zeichenbreite von 6 Rasterabständen ein weiterer Rasterabstand hinzugefügt wird und daß ferner ein Fehlerübertrag von 1/3 Rasterabstand ($P_5 = 1$) entsteht.

In Fortsetzung des Beispiels möge für das folgende Zeichen ein Breitencode 010 vorliegen. Als Speicheradresse ergibt sich nun 01010. Daraus entsteht am Speicherausgang 101011. Das entspricht der Zeichenbreite 5 und der Fehlersumme von 2/3 Rasterabstand ($P_6 = 1$).

Die Ausbildung der Schaltungsanordnung zur Transformation der Zeichenbreite bei der Darstellung von Schriftzeichen in unterschiedlichen Wiedergabegeräten ist nicht auf die vorgestellten Ausführungsbeispiele beschränkt. So kann beispielsweise der Multiplexer 13 in dem Ausführungsbeispiel nach Fig. 4 durch ein Schieberegister ersetzt werden. Ferner kann anstelle des Korrekturspeichers 9 ein Addierer vorgesehen werden, dem das Breitenkorrekturregister 10 als Akkumulator beigeordnet ist.

## Patentansprüche

1. Verfahren zur Transformation der in Rasterabständen gemessenen Zeichenbreite bei der Darstellung von Schriftzeichen in unterschiedlichen Wiedergabegeräten, dadurch gekennzeichnet, daß bei einem rechnerisch nicht ganzzahligen Wert der Zeichenbreite bei dem einen Wiedergabegerät die tatsächliche Breite des wiedergegebenen Schriftzeichens auf den nächstniederen ganzzahligen Wert reduziert wird, daß die Differenzen zwischen dem tatsächlichen und dem rechnerischen Wert der Zeichenbreite zu einer Fehlersumme aufaddiert werden und daß zwischen zwei aufeinanderfolgenden

# 0 050 786

Schriftzeichen ein Rasterabstand eingefügt wird, sobald die Fehlersumme den Wert « Eins » erreicht oder überschritten hat, wobei ein den Wert « Eins » gegebenenfalls überschreitender Betrag in die weitere Fehleraddition einbezogen wird.

2. Schaltungsanordnung zur Durchführung des Verfahrens nach Anspruch 1, mit einem durch eine Schreibinformation adressierbaren Zeichengenerator (1) und mit einem Parallel-Serien-Umsetzer (2) zur seriellen Ausgabe von Punktinformationen, dadurch gekennzeichnet, daß ein Zeichenbreitengenerator (3) vorgesehen ist, der zu jeder Schreibinformation eine codierte Zeichenbreiteninformation erzeugt und einer Korrekturschaltung (4) übergibt, daß die Korrekturschaltung (4) die jeweilige Differenz zwischen dem tatsächlichen und dem rechnerischen Wert der Zeichenbreite ermittelt, die Differenzen addiert und eine korrigierte Zeichenbreiteninformation ausgibt, wenn die Summe der Differenzen den Wert « Eins » erreicht oder überschritten hat, und daß ferner eine Folgezeichenlogik (5) zur Erzeugung eines Auslösesignals für das nächstfolgende Zeichen vorgesehen ist.

3. Schaltungsanordnung nach Anspruch 2, dadurch gekennzeichnet, daß die Korrekturschaltung (4) aus einem Korrekturspeicher (9) und einem Breitenkorrekturregister (10) besteht, daß der von dem Zeichenbreitengenerator (3) gelieferte Breitencode einen ersten Teil der Adresse ($A_0$ bis $A_2$) für den Korrekturspeicher (9) bildet, daß der Korrekturspeicher (9) über eine erste Gruppe von Ausgängen ($P_1$ bis $P_4$) eine ein ganzzahliges Vielfaches von Rasterabständen kennzeichnende Breiteninformation und über eine zweite Gruppe von Ausgängen ($P_5$, $P_6$) eine die jeweilige Fehlersumme kennzeichnende Information ausgibt, daß die die Fehlersumme kennzeichnende Information in dem Breitenkorrekturregister (10) zwischengespeichert wird und für das jeweils folgende Zeichen den zweiten Teil der Adresse ($A_3$, $A_4$) für den Korrekturspeicher (9) bildet.

4. Schaltungsanordnung nach Anspruch 3, dadurch gekennzeichnet, daß als Folgezeichenlogik (5) ein durch einen Punkttakt (PT) gesteuerter vorwärts zählender Breitenzähler (12) vorgesehen ist, dessen Zählvolumen den größten Breitenwert eines Schriftzeichens mindestens um eine Einheit übersteigt, daß der Breitenzähler (12) durch die von dem Korrekturspeicher (9) ausgegebene Breiteninformation voreingestellt wird, daß die Breiteninformation das Komplement zu der durch das Zählvolumen gegebenen Zahl in binärer Verschlüsselung darstellt und daß das Übertragssignal (CY) die Übernahme und Verarbeitung der Daten für das folgende Schriftzeichen auslöst.

5. Schaltungsanordnung nach Anspruch 3, dadurch gekennzeichnet, daß als Folgezeichenlogik (5) ein durch einen Punkttakt (PT) gesteuerter rückwärts zählender Breitenzähler (12) vorgesehen ist, dessen Zählvolumen den größten Breitenwert eines Schriftzeichens mindestens um eine Einheit übersteigt, daß der Breitenzähler (12) durch die von dem Korrekturspeicher (9) ausgegebene Breiteninformation voreingestellt wird, daß die Breiteninformation die Zahl der Rasterabstände in binärer Verschlüsselung darstellt und daß beim Erreichen des Zählerstandes « 0 » die Übernahme und Verarbeitung der Daten für das folgende Schriftzeichen ausgelöst wird.

6. Schaltungsanordnung nach Anspruch 3, dadurch gekennzeichnet, daß als Folgezeichenlogik (5) ein durch einen Punkttakt (PT) gesteuertes Breitenschieberegister (11) vorgesehen ist, daß die in das Breitenschieberegister (11) parallel eingegebene und aus dem Breitenschieberegister (11) seriell ausgegebene Breiteninformation ebensoviel « Einsen » in fortlaufender Folge enthält, wie die Breite des Schriftzeichens in Rasterabständen beträgt und daß die erste ausgegebene « Null » die Übernahme und Verarbeitung der Daten für das folgende Schriftzeichen auslöst.

## Claims

1. A method of transforming the character breadth, measured in raster element intervals, for the representation of graphic characters in different reproduction devices, characterised in that when the computed value of the character breadth in the first reproduction device is not a whole number, the actual breadth of the reproduced graphic character is reduced to the next lower whole numbered value, that the differences between the actual value and the computed value of the character breadth are added to form an error sum and that a raster element interval is inserted between two consecutive graphic characters as soon as the error sum reaches or has exceeded the value of « one », where any amount which exceeds the value « one » is included in the continued error addition.

2. A circuit arrangement for carrying out the method claimed in claim 1, comprising a character generator (1) which can be addressed by an item of recorded information and comprising a parallel-series converter (2) for the serial output of items of dot information, characterised in that a character breadth generator (3) is provided which, in respect of each recorded item of information, generates a coded item of character breadth information which transfers to a correcting circuit (4), that the correcting circuit (4) determines the respective difference between the actual value and the computed value of the character breadth, adds the differences, and emits a corrected item of character breadth information when the sum of the differences has reached or exceeded the value « one », and that a following-character-logic unit (5) is provided which generates a trigger signal for the next character.

3. A circuit arrangement as claimed in claim 2, characterised in that the correcting circuit (4) comprises a correcting store (9) and a breadth correcting register (10), that the breadth code supplied by the character breadth generator (3) forms a first part of the address ($A_0$ to $A_2$) for the correcting store (9),

5

that via a first group of outputs ($P_1$ to $P_4$) the correcting store (9) emits an item of breadth information characterising a whole numbered multiple of raster element intervals, and via a second group of outputs ($P_5$, $P_6$) it emits an item of information characterising the respective error sum, that the item of information which characterises the error sum is intermediately stored in the breadth correcting register (10) and for the following character forms the second part of the address ($A_3$, $A_4$) for the correcting store (9).

4. A circuit arrangement as claimed in claim 3, characterised in that the following-character-logic unit (5) comprises a forwards counting breadth counter (12) which is controlled by a dot clock signal (PT) and whose counting capacity exceeds the maximum breadth value of a graphic character at least by one unit, that the breadth counter (12) is preset by the item of breadth information emitted from the correcting store (9), that the item of breadth information forms the complement to the number represented by the counting capacity in binary coding and that the carry signal (CY) triggers the transfer and processing of the data for the following graphic character.

5. A circuit arrangement as claimed in claim 3, characterised in that the following-character-logic unit (5) comprises a backwards counting breadth counter (12) which is controlled by a dot clock signal (PT) and whose counting capacity exceeds the maximum breadth value of a graphic character at least by one unit, that the breadth counter (12) is preset by the item of breadth information emitted from the correcting store (9), that the item of breadth information represents the number of the raster element intervals in binary coding and that when the count of « 0 » is reached, the transfer and processing of the data for the following graphic character is triggered.

6. A circuit arrangement as claimed in claim 3, characterised in that the following-character-logic unit (5) comprises a breadth shift register (11) which is controlled by a dot clock signal (PT), that the item of breadth information which is input in parallel into the breadth shift register (11) and is output in serial form from the breadth shift register (11) contains as many « ones » in a continuous sequence as corresponds to the breadth of the graphic character in raster element intervals and that the first emitted « zero » triggers the transfer and processing of the data for the following graphic character.

**Revendications**

1. Procédé pour transformer la largeur de caractères, mesurée au moyen d'intervalles de trame, lors de la représentation de caractères dans des appareils de reproduction différents, caractérisé par le fait : que dans le cas où dans un appareil de reproduction, la largeur des caractères ne possède pas une valeur égale à un nombre entier calculé, la largeur effective du caractère reproduit est réduite à une valeur correspondant au nombre entier immédiatement inférieur, que les différences entre la valeur effective et la valeur calculée de la largeur des caractères sont additionnées pour former une erreur somme, et qu'un intervalle de trame est inséré entre deux caractères successifs dès que l'erreur somme atteint ou dépasse la valeur « un », auquel cas une valeur dépassant éventuellement la valeur « un » est introduite dans la poursuite de ladite sommation de l'erreur.

2. Montage pour la mise en œuvre du procédé suivant la revendication 1, comportant un générateur de caractères (1) pouvant être adressé au moyen d'une information d'écriture, et un convertisseur parallèle-série (2) servant à délivrer en série des informations de points, caractérisé par le fait qu'il est prévu un générateur de largeur de caractères (3) qui produit, pour chaque information d'écriture, une information codée de largeur de caractère et la transmet à un circuit de correction (4), que le circuit de correction (4) calcule la différence respective entre la valeur effective et la valeur calculée des largeurs des caractères, additionne les différences et délivre une information corrigée concernant les largeurs des caractères, lorsque la somme des différences est égale ou dépasse la valeur « un », et qu'en outre il est prévu un circuit logique (5) de déclenchement du caractère suivant, servant à produire un signal de déclenchement pour le caractère immédiatement suivant.

3. Montage suivant la revendication 2, caractérisé par le fait que le circuit de correction (4) est constitué par une mémoire de corrections (9) et par un registre (10) des corrections de largeur, que le code de largeur, délivré par le générateur (3) de largeurs de caractère, forme une première partie de l'adresse ($A_0$ à $A_2$) pour la mémoire de corrections (9), que la mémoire de corrections (9) délivre, par l'intermédiaire d'un premier groupe de sorties ($P_1$ à $P_4$), une information de largeur caractérisant un multiple entier d'intervalles de trame et, par l'intermédiaire d'un second groupe de sorties ($P_5$, $P_6$), une information caractérisant l'erreur somme respective, que l'information caractérisant l'erreur somme est mémorisée temporairement dans le registre (10) de correction de largeur et forme, pour le caractère respectivement suivant, la seconde partie de l'adresse ($A_3$, $A_4$) pour la mémoire de corrections (9).

4. Montage suivant la revendication 3, caractérisé par le fait qu'il est prévu en tant que circuit logique (5) de déclenchement du caractère suivant, un compteur de largeur (12) qui réalise un comptage progressif et est commandé par une cadence de points (PT) et dont la capacité de comptage dépasse d'au moins une unité la valeur de la largeur maximale d'un caractère, que le compteur de largeur (12) est préréglé par l'information de largeur délivrée par la mémoire de corrections (9), que l'information de largeur représente le complément au nombre déterminé par la capacité de comptage, selon le codage binaire, et que le signal de transfert (CY) déclenche le transfert et le traitement des données pour le

6

caractère suivant.

5. Montage suivant la revendication 3, caractérisé par le fait qu'il est prévu en tant que circuit logique (5) de déclenchement du caractère suivant, un compteur de largeur (12) qui réalise un comptage progressif, est commandé par une cadence de points (PT) et possède une capacité de comptage qui dépasse d'au moins une unité de valeur de la largeur maximale d'un caractère, que le compteur de largeur (12) est préréglé par l'information de largeur délivrée par la mémoire de corrections (9), que l'information de largeur représente le complément au nombre déterminé par la capacité de comptage, selon le codage binaire, et que, lorsque l'état de comptage « débranchement » du compteur est atteint, le transfert et le traitement des données pour le caractère suivant sont déclenchés.

6. Montage suivant la revendication 3, caractérisé par le fait qu'il est prévu, en tant que circuit logique (5) de déclenchement du caractère suivant, un registre à décalage (11) de mémorisation des largeurs, commandé par une cadence de points (PT), que l'information de largeur, qui est introduite en parallèle dans le registre à décalage (11) de mémorisation des largeurs et est délivrée en série à partir de ce registre (11) contient, selon une suite continue, autant de « uns » que la largeur du caractère contient d'intervalles de trame, et que le premier « zéro » délivré déclenche le transfert de traitement des données pour le caractère suivant.

FIG 1

FIG 2

# FIG 3

# FIG 4

# FIG 5

| 2/3 | 1/3 | | | | | 2/3 | 1/3 | | | | | |
|-----|-----|-----|-----|-----|---|-----|-----|-----|-----|-----|-----|-----|
| $A_4$ | $A_3$ | $A_2$ | $A_1$ | $A_0$ | | $P_6$ | $P_5$ | $P_4$ | $P_3$ | $P_2$ | $P_1$ | Hex |
| O | O | O | O | 1 | | 1 | O | 1 | O | 1 | O | 2A |
| O | O | O | 1 | O | | O | 1 | 1 | O | 1 | 1 | 1B |
| O | O | O | 1 | 1 | | O | O | 1 | 1 | O | O | OC |
| O | O | 1 | O | 1 | | 1 | O | O | 1 | 1 | O | 26 |
| O | O | 1 | 1 | O | | O | 1 | O | 1 | 1 | 1 | 17 |
| O | O | 1 | 1 | 1 | | O | O | 1 | O | O | O | 08 |
| O | 1 | O | O | 1 | | O | O | 1 | O | O | 1 | 09 |
| O | 1 | O | 1 | O | | 1 | O | 1 | O | 1 | 1 | 2B |
| O | 1 | O | 1 | 1 | | O | 1 | 1 | 1 | O | O | 1C |
| O | 1 | 1 | O | 1 | | O | O | O | 1 | O | 1 | 05 |
| O | 1 | 1 | 1 | O | | 1 | O | O | 1 | 1 | 1 | 27 |
| O | 1 | 1 | 1 | 1 | | O | 1 | 1 | O | O | O | 18 |
| 1 | O | O | O | 1 | | O | 1 | 1 | O | O | 1 | 19 |
| 1 | O | O | 1 | O | | O | O | 1 | O | 1 | O | OA |
| 1 | O | O | 1 | 1 | | 1 | O | 1 | 1 | O | O | 2C |
| 1 | O | 1 | O | 1 | | O | 1 | O | 1 | O | 1 | 15 |
| 1 | O | 1 | 1 | O | | O | O | O | 1 | 1 | O | 06 |
| 1 | O | 1 | 1 | 1 | | 1 | O | 1 | O | O | O | 28 |